# EUROPEAN PATENT SPECIFICATION

(11) **EP 2 809 508 B1**
(45) Date of publication and mention of the grant of the patent: **13.11.2019**
(21) Application number: 13704488.9
(22) Date of filing: 08.01.2013
(51) Int. Cl.: B31B 50/59, B31B 120/70

(54) **APPARATUS AND METHOD FOR MOULDING CONTAINERS OF PAPER MATERIAL**
VORRICHTUNG UND VERFAHREN ZUR FORMUNG VON PAPIERBEHÄLTERN
DISPOSITIF ET PROCEDE DE FORMAGE DE RECIPIENTS EN MATÉRIAU DE PAPIER

(30) Priority: 30.01.2012 IT BS20120012
(43) Date of publication of application: 10.12.2014
(73) Proprietor: Quality Tools S.r.l., 25020 Capriano del Colle (BS) (IT)
(72) Inventor: TRECCANI, Giuseppe, I-25020 Capriano del Colle (BS) (IT); LEALI, Mauro, I-25020 Capriano del Colle (BS) (IT)
(74) Representative: Pes, Matteo
(86) International application number: PCT/IB2013/050147
(87) International publication number: WO 2013/114226

(56) References cited:
- WO-A2-2010/044117
- JP-A- 2002 036 395
- JP-A- 2002 347 736
- US-A- 3 850 340
- US-A1- 2005 109 653

## Description

### Field of the Invention

The present invention relates to an apparatus and method for moulding containers of paper material, particularly containers provided with a flat perimeter portion, adapted for coupling with a lid, as well as a curled edge located below the flat perimeter portion, as a reinforcement for the container.

This Patent Application claims the benefit of Italian Application No. BS2012A000012, filed on January 30, 2012.

### State of the Art

As used in the context of the present invention, the expression *containers* refers to food-grade dishes, trays and tubs, and the expression *paper material* generally refers to vegetable parchment (VP), multilayer laminated paper or silicone paper as well as cardboard. Generally, the weight of the paper is less than or equal to 200 g/m², and the weight of the cardboard is greater than 200 g/m².

U.S. Patent No. 6,093,460 discloses an apparatus for moulding substantially rectangular-shaped containers from a starting blank which is pre-cut at a workstation external to the apparatus. The material used is a cardboard having a relatively high weight in the range from 200 to 400 g/m², and coated with a resin film on both its entire front and back surfaces. The container is not manufactured "all in once" as is customary to say, but through separate and sequential steps: the starting cardboard is first die-cut by a tool, and the container is then moulded from the die-cut blank with the use of the apparatus; this solution involves dead times resulting in a low yield, as well as high tooling costs.

International Patent Application WO 2010/044117, on behalf of the Applicant, discloses an apparatus for moulding food-grade containers from one continuous strip of moistened paper which is fed to the apparatus. The apparatus comprises a lower stationary die half and an upper die half which can be moved with respect to the lower die half between an opened position and a closed position of the die. The two die halves cooperate to define an impression corresponding to the container to be moulded.

Particularly, an upper cutting blade, an upper permanent pleating / wrinkling ring and an upper curling member are concentrically provided around the upper die half from the outside to the inside thereof; a lower counter cutting blade, a lower counter permanent pleating / wrinkling ring and a lower counter curling member, which are operatively associated with the cutting blade, the permanent pleating / wrinkling ring and the curling member of the upper die half, respectively, are concentrically provided around the lower die half from the outside to the inside thereof. The two die halves are further provided with warming means for drying and consolidating the starting moistened paper within the closed die. The above-described members respectively act for:
- cutting a blank from the starting paper strip, the blank having dimensions which are proportional to the dimensions of the container to be moulded,
- permanent pleating or wrinkling a peripheral crown of the paper blank during the closing stroke of the die halves, and
- forming a curled edge around the side wall of the container during the opening stroke of the two die halves.

The apparatuses described in U.S. 6,093,460 and WO 2010/044117 can obtain containers provided with:
- a bottom and side walls defining the central opening intended for receiving food;
- a flat perimeter portion, also referred to as a ledge or lip, cantileverly and horizontally extending from the side walls at the opposite side with respect to the central opening, and
- a curled edge, serving as a reinforcement for the container to reduce the deformations of the side walls, said curled edge lying above the lying plane of said flat perimeter portion, i.e. facing upward.

The just-described flat perimeter portion is referred to with reference numeral 126 in Figures 22-24 of US 6,093,460, and with reference numeral 102 in Figures 6a-6b of WO 2010/044117.

The just-described curled edge is referred to with reference numeral 127 in Figures 22-24 of U.S. 6,093,460, and it is formed as the member 23 in Figures 6a-6b of WO 2010/044117.

The Applicant has found that having the curled edge above the flat perimeter portion prevents the container from being closed with a lid or film which is welded directly to the flat perimeter portion. Note that, in Figure 23 of U.S. 6,093,460, there is indeed described that a lid is applied to the curled edge 127, and not to the flat perimeter portion 126.

In other words, there is a need for sealing containers of paper material with films or other lids which can be welded or glued to the flat perimeter portion thereof, yet without eliminating the curled edge which confers resistance, particularly against bulging of the side walls, to the containers.

Document U.S. 3,850,340, which is mentioned in the search report for Priority Italian Application No. BS2012A000012, describes an apparatus for moulding aluminium containers in which the perimeter edge is curled downward.

Technical solutions employed for moulding aluminium containers cannot be used for moulding containers of paper material because the above-mentioned paper materials are not so malleable and ductile as aluminium; if paper materials are fed to an apparatus for moulding aluminium containers, they will be torn, thereby preventing the container from being obtained.

Hence, manufacturers of apparatuses for moulding containers of paper material do not rely on the moulding techniques of the prior art for moulding containers from metal sheets. In other words, the Applicant believes that document U.S. 3,850,340 should not be taken into account while evaluating the inventive height of the appended claims.

### Objects and summary of the invention

Accordingly, an aim of the present invention is to provide an apparatus and method for moulding containers of paper material which are provided with a flat perimeter portion and a curled edge serving as a reinforcement for the container, in which the curled edge is configured or arranged in such a way as to not prevent a lid or film from being applied directly in contact with the flat perimeter portion.

Therefore, in a first aspect, the present invention relates to an apparatus according to claim 1.

Particularly, the invention relates to an apparatus for moulding containers from a strip of paper material. The apparatus comprises a stationary die-holder plate, and a die-holder plate which is movable with respect to it between an distal opened position and a proximal closed position. The stationary die-holder plate comprises a respective stationary die half and the movable die-holder plate comprises a respective mobile die half.

In the closed position, the two die halves, i.e. the stationary die half and the mobile die half, cooperate to define an impression corresponding to a container provided with a bottom, a side wall, and a substantially flat perimeter portion cantileverly extending from the side wall.

A curling member, a permanent pleating / wrinkling member and a cutting blade are concentrically provided around the mobile die half and sequentially arranged from the inside to the outside thereof. Similarly, a counter curling member, a counter permanent pleating / wrinkling member and a counter cutting blade are concentrically provided around the stationary die half and sequentially arranged from the inside to the outside thereof.

The blade and the counter cutting blade interact to cut a blank from the starting strip, the dimensions of the blank being proportional to the dimensions of the container to be moulded. The permanent pleating / wrinkling member and the counter permanent pleating / wrinkling member interact to permanent pleat or wrinkle a peripheral crown of the blank at least at a portion of the side wall and the flat perimeter portion of the container being moulded. The curling member and the counter curling member interact to form a curled edge extending externally from the peripheral flat portion of the container being moulded.

Advantageously, the mobile die half can be at least partially inserted into the counter curling member so as to form the curled edge of the container between the lying plane of the respective flat perimeter portion and the bottom of the container itself.

In the preferred embodiment, the apparatus is configured in such a way as to form the curled edge substantially tangentially to the lying plane of the flat perimeter portion.

Compared to the traditional solutions which are now commercially available, the apparatus according to the present invention allows to obtain containers of paper and cardboard which are provided with a flat perimeter portion (lip or ledge) substantially parallel to the bottom and adapted for coupling with a lid or sealing film, and also provided with a reinforcement curled edge located under the flat portion. Thus, the curled edge does not interfere with the flat portion, which remains completely accessible to the lid or film from the top thereof.

For the reasons given above, the present invention achieves an important improvement in the field of food-grade paper/ cardboard containers which, while being environmentally friendly, are often discarded by users in favor of aluminium containers which, until now, are easier to be sealed.

Generally, containers obtainable with the apparatus according to the present invention are circular, square or rectangular in shape. Regardless of the shape, containers have a bottom and a side wall jointly delimiting the opening intended for receiving food. Obviously, if containers are square or rectangular in shape, the side wall is defined by four surfaces. The substantially flat portion, also referred to as a ledge or lip, cantileverly and outwardly extends from the side wall, and the curled edge is located under the ledge at an intermediate position between the lying plane of the bottom of the container and the lying plane of the ledge, preferably substantially tangentially to the latter.

Preferably, the portion of the mobile die half which can be at least partially inserted into the counter curling member is the radially outermost portion which defines, along with a corresponding portion of the stationary die half, the flat perimeter portion of the moulded container. Particularly, in a step of moulding of the container, the mobile die half and the stationary die half are closed against each other at opposite sides with respect to the paper material, and the portion of the paper material intended to become the flat perimeter portion of the container is sandwiched between the radially outermost portions of the two die halves. Preferably, the mobile die half can be inserted into the counter curling member in the axial direction, i.e. the direction in which the mobile die half is moved towards the stationary die half, over a length corresponding to at least the radial extension of the curled edge when hypothetically rolled out on a plane. In other words, when the curled edge is hypothetically rolled out on the lying plane of the flat portion of the moulded container, the radial extension of the edge corresponds to the axial distance covered by the mobile die half when it is inserted into the counter curling member.

In the preferred embodiment, the radially outermost portion of the stationary die half cannot be inserted into the curling member arranged on the movable die-holder plate. At most, the inner edge of the curling member is flush to the radially outermost portion of the stationary die half.

Preferably, the curling member and the counter curling member include respective grooves which are opposite to each other. For example, the grooves are toroidal in shape, and they extend at the lower edge of the curling member and the upper edge of the counter curling member.

Preferably, the mobile die half and the cutting blade are integral with the movable die-holder plate; the curling member and the permanent pleating / wrinkling member can be alternately translated with respect to the movable die-holder plate in both ways of the direction in which the movable die-holder plate is moved towards the stationary die-holder plate, to allow for a relative movement with respect to the movable die-holder plate.

Preferably, the stationary die half can be alternately translated with respect to the stationary die-holder plate in both ways of the direction in which the movable die-holder plate is moved towards the stationary die-holder plate. The movement of the stationary die half with respect to the stationary die-holder plate is minimal, and it corresponds to the stroke traveled by the stationary die half together with the mobile die half while it is inserted into the counter curling member.

Preferably, the counter blade and the counter curling member are integral with the stationary die-holder plate. Instead, the counter permanent pleating / wrinkling member can be preferably translated with respect to the stationary plate in both ways of the afore said approach direction.

More preferably, the counter permanent pleating / wrinkling member is associated with a respective actuator member acting to move the counter permanent pleating / wrinkling member with respect to the stationary plate half as necessary during the process of moulding of the container. Particularly, the actuator member acts to translate the counter permanent pleating / wrinkling member between a first, raised position in which the counter permanent pleating / wrinkling member is flush to the upper surface of the stationary die half, and a second, lowered position in which the counter permanent pleating / wrinkling member is flush to the side surface of the stationary die half. The actuator member is operated when the mobile die half is being closed against the stationary die half, so as to synchronize the blank-permanent pleating operation with the respective deep drawing operation as well as to prevent paper from tearing.

Preferably, the mobile die half is axially provided with an inner mobile extraction plate with respect to the extraction plate itself, said extraction plate acting to expel the container from the opened die when the container is completely formed.

Preferably, the stationary and mobile die halves are warmed in order to stabilize the paper material of the container being moulded.

Therefore, in a second aspect, the present invention relates to a method according to claim 7.

Particularly, an object of the invention is a method for moulding containers having a bottom, an at least partially permanent pleated side wall and a curled peripheral rim, starting from a strip of paper material. The method comprises the steps of:
a) cutting or die-cutting the strip in order to obtain a blank having dimensions proportional to the dimensions of the container to be moulded;
b) retaining the blank at a perimeter crown thereof, and permanent pleating or wrinkling one or more portions of the perimeter crown;
c) deep-drawing the blank at a portion thereof which is internal to said perimeter crown in order to form the bottom and the side wall of the container while leaving a flat perimeter portion, also referred to as a ledge or lip, external to the side wall;
d) folding a peripheral crown of the flat portion substantially perpendicularly to the lying plane of the bottom of the container being moulded and towards it; and
e) rolling the peripheral crown of said flat portion onto itself to obtain a curled perimeter edge around the flat portion itself at an intermediate position between the lying plane of the flat portion and the bottom of the moulded container.

Note the position of the curled edge, which remains substantially below the level of the ledge of the resulting container so as not to hinder the positioning of a film or lid. At most, the curled edge is tangent to the lying plane of the ledge.

Preferably, steps b) and c) are substantially simultaneous.

Preferably, steps a) to e) are carried out by means of the apparatus according to the present invention.

In particular step a) is carried out by bringing the cutting blade and the counter cutting blade each next the other along the perimeter of the blank to be moulded. For example, the cutting blade is a punch, and the counter cutting blade is a matching blanking die operatively associated therewith. Alternatively, the cutting blade is a hollow punch, and the counter blade is an abutment surface for the hollow punch.

Step b) is carried out by at least partially engaging the permanent pleating / wrinkling member with the counter permanent pleating / wrinkling member from opposite sides with respect to the blank obtained in step a). In other words, a portion of the blank intended to become the side wall of the container is sandwiched between these members. Preferably, as for circular containers, the entire side wall is permanent pleated or wrinkled; as for square or rectangular containers, permanent pleating / wrinkling is preferably carried out only at the corners of the side wall.

Step c) is carried out by fitting the mobile die half onto the stationary die half from opposite sides with respect to the blank obtained in step a) and permanent pleated or wrinkled in step b). Practically, during step c), the die defined by the two die halves is closed.

When steps b) and c) are simultaneous, the permanent pleating / wrinkling member and the counter permanent pleating / wrinkling member are firstly minimally engaged with each other, and then they are increasingly engaged as step c) proceeds to completion. In this case, the actuator member of the counter permanent pleating / wrinkling member acts to lower this component towards the stationary plate half so as to second the partial slip-off of the paper material, thereby preventing it from being broken or damaged.

Step d) is carried out by translating the mobile die half and the stationary die half which, in this step, are closed on each other and integral to each other, at least partially into the counter curling member, in the way which leads the movable die-holder plate to close against the stationary die-holder plate.

Step e) is carried out by displacing the curling member in abutment against the counter curling member and translating the mobile die half and the stationary die half which, in this step, are closed on each other and integral to each other, in the opposite way with respect to step d), in a position in which the mobile die half is not inserted in the counter curling member and effecting a relative movement with respect curling members.

During step e), the opposite grooves of the curling member and the counter curling member form a toroidal cavity adapted for guiding the portion of the blank intended to be curled as defined above the peripheral crown.

During step b), the portion of the blank intercepted by both the permanent pleating / wrinkling member and the respective counter member, which are closed against each other, is at least partially slipped off to allow the drawing step c) to proceed without tearing the paper material.

Preferably, the method according to the present invention further comprises the step of moistening the strip of paper material before moulding the container, and the further step of warming the mobile die half and the stationary die half to stabilize the shape of the container being moulded before it is completed.

It is also disclosed a food-grade container of paper material comprising a bottom, a side wall extending from the bottom, a flat portion cantileverly extending from said flat wall, substantially parallel to the bottom or however substantially horizontal, and a curled perimeter edge extending from said flat portion.

Said curled edge is at an intermediate position between the lying plane of the flat portion and the lying plane of the bottom.

### Brief description of the drawings

More details on the invention will be evident from the following of the description made with reference to the attached illustrative and not limitative drawings, wherein:
- Figure 1A is a vertical sectional view of an apparatus according to the present invention in a first configuration;
- Figure 1B is a perspective view of a strip of paper material which is fed to the apparatus as shown in Figure 1A;
- Figure 2A is a vertical sectional view of the apparatus as shown in Figure 1, in a second configuration;
- Figure 2B is an enlarged vertical sectional view of a detail of Figure 2A;
- Figure 2C is a perspective view of a blank obtained from the strip as shown in Figure 1B;
- Figure 3A is a vertical sectional view of the apparatus as shown in Figure 1, in a third configuration;
- Figure 3B is an enlarged vertical sectional view of a detail of Figure 3A;
- Figure 3C is a perspective view of a container being moulded in the apparatus as shown in Figure 3A;
- Figure 4A is a vertical sectional view of the apparatus as shown in Figure 1, in a fourth configuration;
- Figure 4B is an enlarged vertical sectional view of a detail of Figure 4A;
- Figure 4C is a perspective view of a container being moulded in the apparatus as shown in Figure 4A;
- Figure 5A is a vertical sectional view of the apparatus as shown in Figure 1, in a fifth configuration;
- Figure 5B is an enlarged vertical sectional view of a detail of Figure 5A;
- Figure 5C is a perspective view of a container being moulded in the apparatus as shown in Figure 5A;
- Figure 6A is a vertical sectional view of the apparatus as shown in Figure 1, in a sixth configuration;
- Figure 6B is an enlarged vertical sectional view of a detail of Figure 6A;
- Figure 6C is a perspective view of a container being moulded in the apparatus as shown in Figure 6A;
- Figure 7A is a vertical sectional view of the apparatus as shown in Figure 1, in a seventh configuration;
- Figure 8A is a top perspective view of the container as shown in Figure 7B;
- Figure 8B is a vertical sectional view of the container as shown in Figure 8A;
- Figure 8C is an enlargement of Figure 8B;
- Figure 9 is a top perspective view of another container.

### Detailed description of the invention

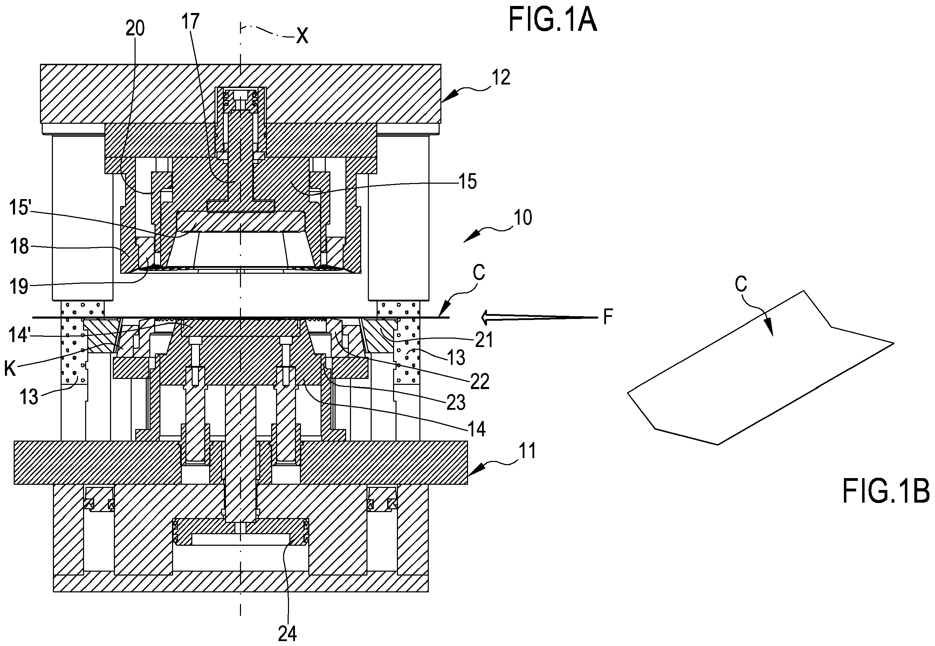

In Figure 1 there is shown, by way of example, an apparatus for moulding containers of paper or cardboard according to the present invention, as generally referred to by reference numeral 10.

A continuous strip C of paper or cardboard is fed to the apparatus 10 in the direction indicated by arrow F.

The apparatus 10 includes a stationary lower die-holder plate 11, i.e. a motionless die-holder plate, and an upper die-holder plate 12 which can be alternately translated along guide columns 13 towards the stationary die-holder plate 11 in both ways of axial direction X.

The stationary die-holder plate 11 is constrained to a corresponding die half 14 which is referred to as a stationary die half, and the movable die-holder plate 12 is constrained to a corresponding die half 15 which is referred to as a mobile die half. The two die halves 14, 15 mutually cooperate to define at least one impression corresponding, in shape and size, to the container 100 to be moulded.

Preferably, the strip C is moistened, and the die halves 14, 15 can be electrically warmed in order to warm and dry the moistened paper material during a specific step in the moulding of the desired container as described below.

The movable die-holder plate 12 can be translated between two end positions: the opened position shown in Figure 1, in which the upper die half 15 is separate and away from the lower die half 14 provided on the stationary die-holder plate 11, and a maximum closed position, in which the upper die half 15 is pressed against and engaged with the lower die half 14.

In the embodiment shown in figures, the stationary die half 14 is provided with an upwardly removable internal plate 14'. Similarly, the mobile die half 15 is provided with a downwardly removable extraction plate 15' to facilitate the expulsion of the moulded container. For example, the extraction plate 15' is translated with respect to the die half 15 by a corresponding pneumatic pusher 17.

A curling member 20, a permanent pleating and/ or wrinkling member 19 and a cutting blade 18 facing towards the stationary die-holder plate 11 are radially provided at different levels around the upper die half 15 from the inside to the outside of the movable die-holder plate 12. If the container to be moulded is circular in shape, the members 15, 18, 19 and 20 are generally shaped as rings.

A counter curling member 23, a counter permanent pleating / wrinkling member 22 and a counter cutting blade 21, which are operatively associated with the curling member 20, the permanent pleating and/ or wrinkling member 19 and the cutting blade 18, respectively, are provided on the stationary die-holder plate 11. An actuator member K for driving the counter permanent pleating / wrinkling member 22 is also provided. The actuator member K is translated in the direction X to bring the counter permanent pleating / wrinkling member 22 close to the stationary plate half 11 when the die is being closed. The actuator K is supported by pneumatic pistons; when the movable plate half 12 is being closed against the stationary plate half, it overcomes the resistance offered by the pneumatic pistons, thereby causing the counter permanent pleating / wrinkling member 22 to move towards the plate half 11.

Particularly, the cutting blade 18 is a blanking punch, and the counter blade 21 is a blanking die. Alternatively, these two members may be replaced with a hollow punch and a corresponding countercheck surface.

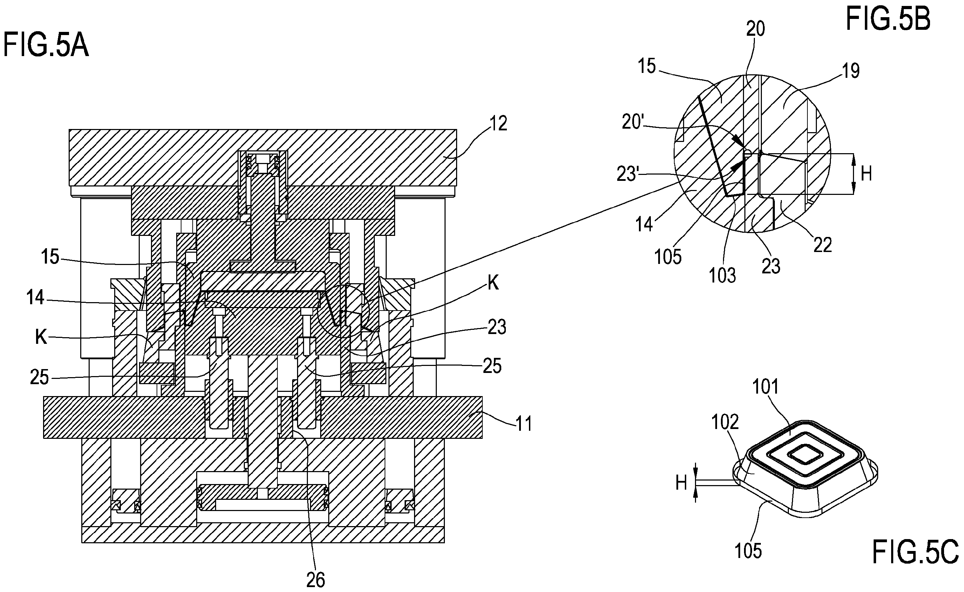

Particularly, as best shown in Figure 5B, the counter curling member 23 has a rounded groove 23' facing towards a corresponding rounded groove 20' of the upper curling member 20.

In the embodiment shown in the attached figures, the mobile die half 15 and the cutting blade 18 are integral with the movable die-holder plate 12. The curling member 20 and the permanent pleating / wrinkling member 19 can be alternately translated in both ways of the direction X with respect to the movable die-holder plate 12, under the action of appropriate drive means.

The stationary die half 14 can be alternately translated in both ways of the direction X with respect to the stationary die-holder plate 11. The stroke of the stationary die half 14 is controlled by the pneumatic pusher 24.

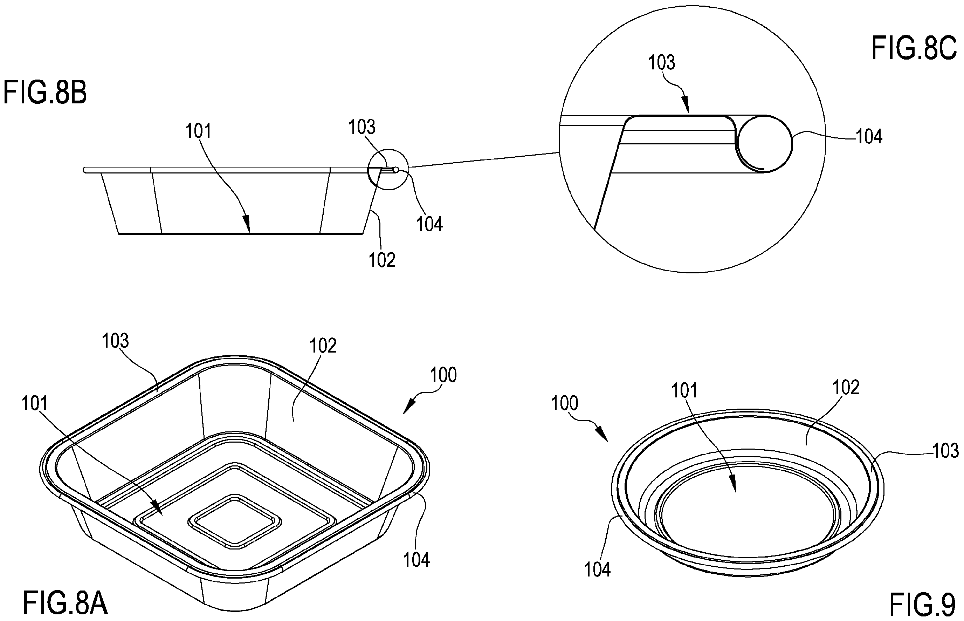

Figure 8A and Figure 9 show, in perspective, two embodiments of a container 100 which are respectively square and circular in shape.

The dish comprises a bottom 101 surrounded by a side wall 102.

As shown in Figures 8B and 8C, a flat portion 103, referred to as a lip or ledge, cantileverly extends around the side wall 102 and substantially parallel to the bottom 101. The flat portion 103 is adapted for coupling with a lid or sealing film of the type usually employed for food packaging. The coupling with the lid or film can be mechanical, thermal, or by means of glues.

A curled peripheral edge 104 extends downwardly from the flat portion to stiffen the container, thus reducing its deformation while in use. The curled edge 104 surrounds the flat portion 103 and extends between the lying plane thereof and the lying plane of the bottom 101.

The container 100 is produced by the apparatus 10 as follows.

When the moulding cycle starts, the apparatus 10 is opened as illustrated in Fig. 1A, and it is arranged so as to feed a portion of the paper strip C, shown in Figure 1B, between the plates 11 and 12 regardless of the size of the container 100 to be produced. In the embodiment shown in the figure, the paper is moistened. The paper strip C is fed by appropriate external feeding means which are synchronized with the opening and closing movements of the apparatus 10; the strip is halted at the position shown in Figure 1A.

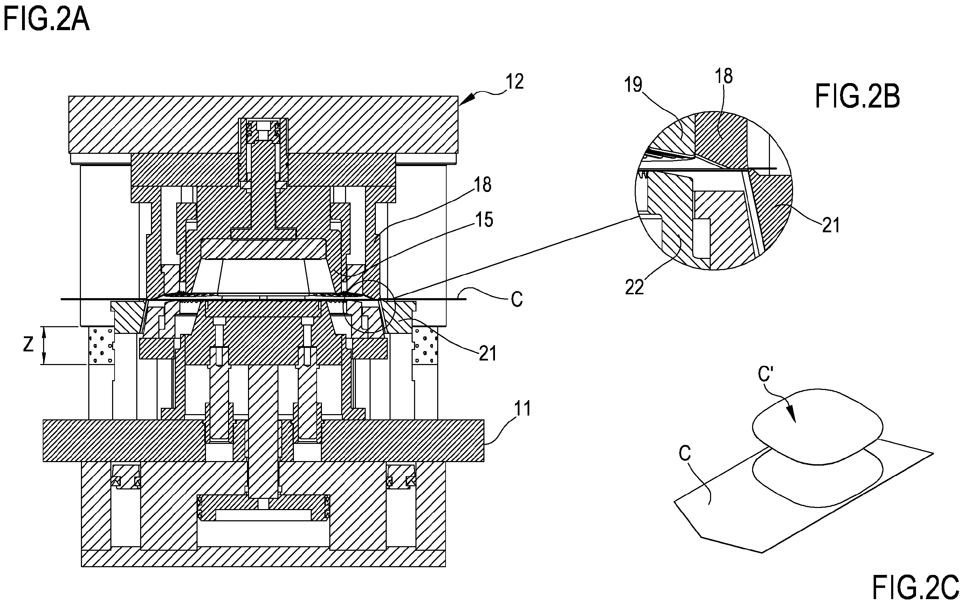

Then, the apparatus 10 begins to be closed, as shown in Figure 2A. When the plate 12 has been moved towards the plate 11 over about two thirds of its total stroke, the cutting blade 18 is engaged with the counter cutting blade 21 just enough to punch a blank C' out from the paper strip C, as shown in Figure 2C. The dimensions of the blank C' are compatible with the dimensions of the container 100 to be produced.

Figure 2B shows an enlargement of the inner portion of the circled area of Figure 2A. In this step, the permanent pleating member 19 and the respective counter member 22 remain away from one another as the upper die half 15 and the lower die half 14 do.

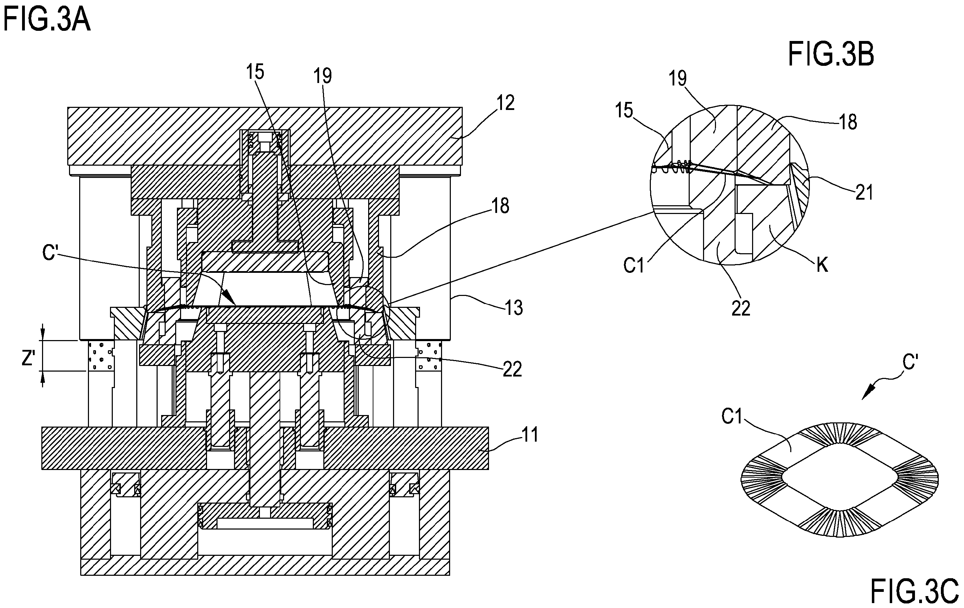

Figure 3A shows a third step of the moulding cycle for moulding the container 100. Compared to the configuration shown in Figure 2A, the plate 12 has been further moved (over a few millimeters) towards the plate 11, as can be seen by comparing the strokes Z and Z' of the guide columns 13 (Z' < Z). Therefore, the cutting blade 18 has been further inserted into the counter blade 21, and the permanent pleating member 19 and the counter permanent pleating member 22 are brought against each other to clamp the blank C' at opposite sides. The upper die half 15 is away from the lower die half 14. Figure 3B is an enlargement of the inner portion of the circled area of Figure 3A. Figure 3C shows the corresponding state of progress of the process for moulding the container 100 within the apparatus 10. In this step, a peripheral crown C1 is slightly engraved by the permanent pleating members 19, 22 either along the whole periphery of the blank C' or at least in the portions thereof which will become the corners of the wall 102 of the container 100, so as to facilitate the actual permanent pleating operation at a later stage of the moulding process (Fig. 5).

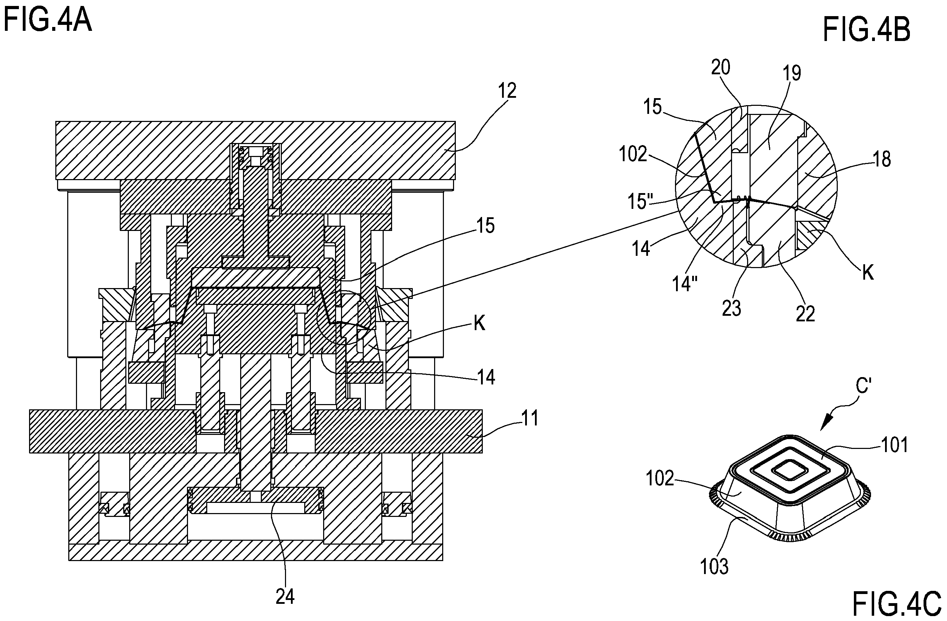

Then, as shown in Figure 4A, the closing movement of the apparatus 10 is continued according to a stroke corresponding to the height of the finished container 100, except for the curled edge 104. In other words, the plate 12 is further lowered towards the plate 11 to move the upper die half 15 in abutment against the die half 14, thereby deep-drawing the blank C' interposed therebetween. Figure 4B is an enlargement of the inner portion of the circled area of Figure 4A, in which it is clear that a portion of the blank C' has been slipped off the permanent pleating members 19, 22 as a result of deep-drawing, as also apparent from a comparison with Figure 3B. Figure 4C shows the corresponding state of progress of the process for moulding the container 100 within the apparatus 10. The container 100 is substantially moulded, except for the curled edge 104. In this step, permanent pleating has been completed; as shown in Figure 4B, the permanent pleating members 19, 22 are at a minimum distance and partially interpenetrated. The flat portion 103 cantileverly extends from the side wall 102 and parallel to the bottom 101, part of which flat portion has to be rolled up on itself to form the curled edge 104.

Figure 5A shows the apparatus 10 in a further step of the moulding cycle in which it reaches its maximum closed position, i.e. the position in which the plate 12 is as much as possible close to the plate 11. The rods 25 adapted for guiding the stationary die half 14 are partially fitted into the respective seats 26 as the pusher 24 is, and the stationary die half 14 as coupled to the mobile die half 15 is inserted into the counter curling member 23 over a length corresponding to the extension H of the peripheral portion 105 of the blank C', which is then vertically folded from the flat portion 103, as shown in Figures 5B and 5C. The portions of the stationary die half 14 and the mobile die half 15, which are inserted into the counter curling member 23, are at least the radially outermost portions 14" and 15" defining the flat surface 103 of the container 100.

In other words, inserting the die halves 14, 15 downwardly into the counter curling member 23 in the direction X, beyond the lying plane of the respective rounded groove 23', causes the peripheral portion 105 of the flat portion 103 to be bent into a position which is substantially perpendicular to the bottom 101.

The actuator K has moved the counter permanent pleating / wrinkling member 22 towards the stationary plate half 11 (compare with Figure 1) to accommodate the closing movement of the die, i.e. to support the deep-drawing of the blank without breaking it. In practice, when the die is being closed, both the permanent pleating members 19, 22 are moved towards the stationary plate half 11 so as to prevent the blank from breaking.

In practice, the actuator K lowers the counter permanent pleating / wrinkling member 22 towards the stationary plate half 11 in such a way as to prevent the counter permanent pleating / wrinkling member 22 and the permanent pleating / wrinkling member 19 from excessively interpenetrating, or to prevent these members from interpenetrating too quickly before the blank can be at least partially slipped off.

In this step, the curling member 20 and the counter curling member 23 are abutted against each another in such a way that the respective rounded grooves 20', 23' form a toroidal groove along the wall 102 of the blank C' at the peripheral portion 105 thereof.

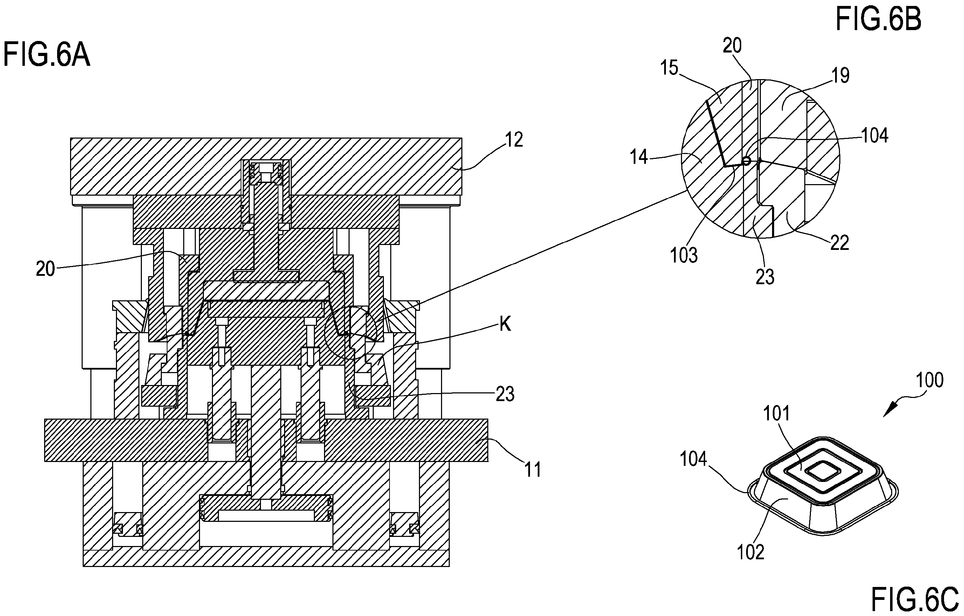

Figure 6A shows the apparatus 1 in the final step of the moulding cycle for moulding the container 100, which is shown upside down (with the bottom up) in Figure 6C. Compared to the previous step as described with reference to Figure 5A, the plate 12 is moved to a distance from the plate 11 which is the same as that shown in Figure 4A. The die halves 14, 15 remain integral to each other and the curling member 20 is translated towards the stationary plate 11 with respect to the movable plate 12. A relative movement occurs between the die halves 14, 15 which remain integral to each other and raised along with the plate 12, and the curling members 20, 23 which remain integral and stationary with the plate 11. This movement causes the peripheral portion 105 of the blank C' to be curled within said toroidal groove, thereby forming the edge 104 between the lying plane of the flat portion 103 and the bottom 101 of the container 100, as best shown in Figure 6B.

In this step, the actuator K begins to be raised from its lowered position as shown in Figure 5.

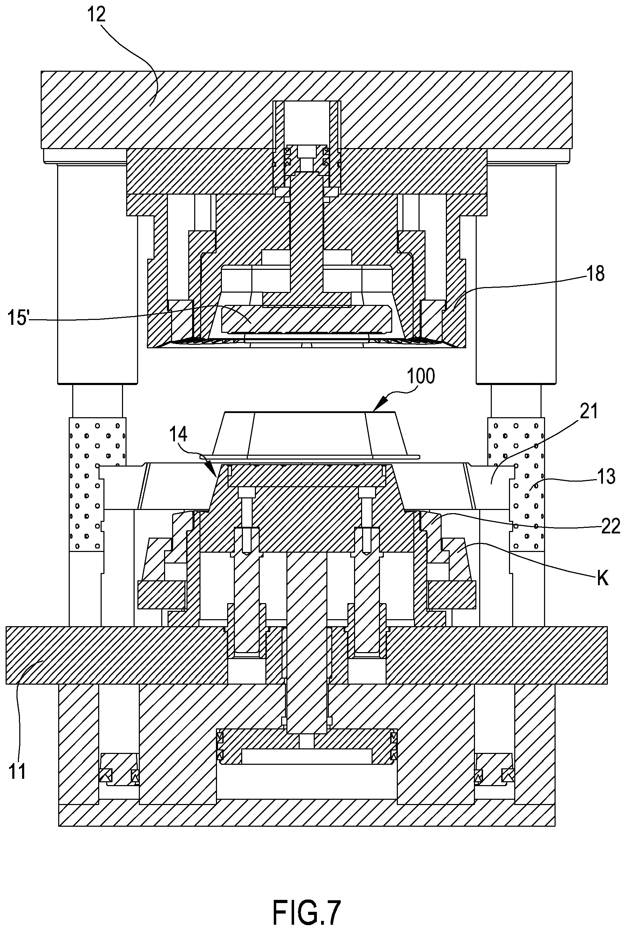

In Figure 7A, the apparatus is shown in its fully opened position, in which the finished container 100 is released and expelled by the plate 15' of the upper die half 15 moving forward. In this way, the conditions of Fig. 1 are restored so as to initiate a new, successive moulding cycle.

In at least one of the steps described above, the die halves 14 and 15 are electrically warmed to reduce the initial moisture content of the paper and thus stabilize the shape of the container 100.

## Claims

1. Apparatus (10) for moulding containers (100) from a strip (C) of paper material, comprising a stationary die-holder plate (11) and a movable die-holder plate (12) which is movable with respect thereto between a distal, opened position, and a proximal, closed position, in which:
- the stationary die-holder plate (11) includes a respective stationary die half (14) and the movable die-holder plate (12) includes a respective mobile die half (15), wherein, in the closed position, the stationary die half (14) and the mobile die half (15) together define an impression corresponding to a container (100) provided with a bottom (101), a side wall (102) and a flat perimeter portion (103) cantileverly extending from the side wall (102), and
- a curling member (20), a permanent pleating/ wrinkling member (19) and a cutting blade (18) are concentrically and successively provided around the mobile die half (15), and
- a counter curling member (23), a counter permanent pleating / wrinkling member (22) and a counter cutting blade (21) are concentrically and successively arranged around the stationary die half (14), and wherein
- the cutting blade (18) and the counter cutting blade (21) interact to cut, from the starting strip (C), a blank (C') having dimensions proportional to the dimensions of the container (100) to be moulded, the permanent pleating / wrinkling member (19) and the counter permanent pleating / wrinkling member (22) interact to permanent pleat or wrinkle a peripheral crown (C1) of said blank (C') by at least part of both the side wall (102) and the flat perimeter portion (103) of the container (C') being moulded, and the curling member (20) and the counter curling member (23) interact to form a curled edge (104) extending from the flat perimeter portion (103) of the container (C') being moulded, **characterized in that** the mobile die half (15) can be at least partially inserted into the counter curling member (23) to form the curled edge (104) of the container (100) between the lying plane of the related flat perimeter portion (103) and the bottom (101) of the container (100) itself.

2. Apparatus (10) according to claim 1, wherein the portion of the mobile die half (15) which can be at least partially inserted into the counter curling member (23) is the radially outermost portion which defines, along with a corresponding portion of the stationary die half (14), the flat perimeter portion (103) of the container (C') being moulded.

3. Apparatus according to claim 1 or claim 2, wherein the mobile die half (15) can be inserted into the counter curling member (23) for a length (H) at least corresponding to the radial extension of the curled edge (104) as hypothetically developed on a plane.

4. Apparatus according to any one of claims 1-3, wherein the radially outermost portion (14'') of the stationary die half (14) defines, along with the corresponding portion (15") of the mobile die half (15), the flat perimeter portion (102) of the container (C') being moulded, and wherein the radially outermost portion (14") of the stationary die half (14) cannot be inserted into the curling member (20).

5. Apparatus according to any one of the preceding claims, wherein the curling member (20) and the counter curling member (23) include respective grooves (20', 23') which are opposite to each other.

6. Apparatus (10) according to any one of the preceding claims, wherein:
- the mobile die half (15) and the cutting blade (18) are integral to the movable die-holder plate (12),
- the curling member (20) and the permanent pleating / wrinkling member (19) can be alternately translated with respect to the movable die-holder plate (12) in both ways of approach direction (X) of the movable die-holder plate (12) to the stationary die-holder plate (11) in order to cause a relative movement between the mobile die half (15) and the curling member (20) if required,
- the stationary die half (14) can be alternately translated with respect to the stationary die-holder plate (11) in both ways of approach direction (X) of the movable die-holder plate (12) to the stationary die-holder plate (11) in order to cause a relative movement between the stationary die half (14) and the counter curling member (23) if required;
- the counter blade (21) and the counter curling member (23) are integral to the stationary die-holder plate (11) ;
- the counter permanent pleating / wrinkling member (22) can be alternately translated with respect to the stationary die-holder plate (11) in both ways of said approach direction (X).

7. Method for molding containers (100) having a bottom (101), an at least partially permanent pleated side wall (102) and a curled peripheral edge (104) from a strip (C) of paper material, comprising the steps of:
a) cutting or die-cutting the strip in order to obtain a blank (C') having dimensions proportional to the dimensions of the container (100) to be moulded;
b) permanent pleating or wrinkling one or more portions of a perimeter crown (C1) of said blank (C');
c) deep-drawing said blank (C') on the related portion internal to said perimeter crown (C1) in order to form the bottom (101) and the side wall (102) of the container while leaving a flat perimeter portion (103) external to the side wall;
d) folding a peripheral portion (105) of said flat portion (103) in a position substantially orthogonal to the lying plane of the bottom (101) of the container (C') being moulded and towards it;
e) rolling the peripheral portion (105) of said flat portion (103) onto itself in order to obtain a curled perimeter edge (104) around the flat portion (103) itself, in an intermediate position between the lying plane of the flat portion (103) and the bottom (101) of the moulded container,
wherein the steps from a) to e) are carried out by means of the apparatus (10) according to any one of claims 1-6, and wherein:
- step a) is carried out by bringing the cutting blade (18) and the counter cutting blade (21) each next the other along the perimeter of the blank (C') to be molded;
- step b) is carried out by at least partially engaging the permanent pleating / wrinkling member (19) with the counter permanent pleating / wrinkling member (22) from opposite sides with respect to the blank (C') obtained in step a);
- step c) is carried out by fitting the mobile die half (15) onto the stationary die half (14) from opposite sides with respect to the blank (C') obtained in step a) and permanent pleated or wrinkled in step b);
**characterized in that**:
- step d) is carried out by translating the mobile die half (15) and the stationary die half (14) which, in this step, are closed on each other and integral to each other, at least partially into the counter curling member (23), in the way which leads the movable die-holder plate (12) to close against the stationary die-holder plate (11);
- step e) is carried out by displacing the curling member (20) in abutment against the counter curling member (23) and translating the mobile die half (15) and the stationary die half (14) which, in this step, are closed on each other and integral to each other, in the opposite way with respect to step d), in a position in which the mobile die half (15) is not inserted in the counter curling member (23), and effecting a relative movement with respect to both the curling member (20) and the counter curling member (23) .

8. Method according to claim 7, wherein the steps b) and c) are carried out simultaneously.

9. Method according to claim 7, wherein, during the step b), the portion (C1) of the blank (C') intercepted by both the permanent pleating / wrinkling member (19) and the counter permanent pleating / wrinkling member (22), which are closed on each other, is at least partially taken off from these members to allow for the deep-drawing of step c) .

10. Method according to any one of claims 7-9, further comprising the step of moistening the strip (C) of paper material before moulding the container and the step of warming the mobile die half (15) and the stationary die half (14) in order to stabilize the shape of the container (C') being moulded before it is completed.

## Patentansprüche

1. Vorrichtung (10) zum Formen von Behältern (100) aus einem Streifen (C) aus Papiermaterial, mit einer feststehenden Werkzeugträgerplatte (11) und einer relativ dazu beweglichen Werkzeugträgerplatte (12), die zwischen einer distalen, geöffneten Stellung und einer proximalen, geschlossenen Stellung beweglich ist, bei der:
- die feststehende Werkzeugträgerplatte (11) jeweils eine feststehende Werkzeughälfte (14) und die bewegliche Werkzeugträgerplatte (12) jeweils eine bewegliche Werkzeughälfte (15) umfasst, wobei in der Schließstellung die feststehende Werkzeughälfte (14) und die bewegliche Werkzeughälfte (15) zusammen einen Abdruck definieren, der einem Behälter (100) entspricht, der mit einem Boden (101), einer Seitenwand (102) und einem flachen, von der Seitenwand (102) freitragend erstreckenden Umfangsabschnitt (103), versehenen ist, und
- ein Bördelelement (20), ein dauerhaftes Plissier-/Faltenelement (19) und ein Schneidmesser (18) konzentrisch und nacheinander um die bewegliche Werkzeughälfte (15) angeordnet sind,
- ein Gegen-Bördelelement (23), ein dauerhaftes Gegen-Plissier-/Faltenelement (22) und ein Gegen-Schneidmesser (21) konzentrisch und nacheinander um die feststehende Werkzeughälfte (14) angeordnet sind, und wobei
- das Schneidmesser (18) und das Gegen-Schneidmesser (21) zusammenwirken, um aus dem Ausgangsstreifen (C) einen Rohling (C') mit zu den Abmessungen des zu formenden Behälters (100) proportionalen Abmessungen zu schneiden, wobei das dauerhafte Plissier-/Faltenelement (19) und das dauerhafte Gegen-Plissier-/Faltenelement (22) zusammenwirken, um eine umlaufende Krone (C1) des Rohlings (C') in zumindest einem Teil der Seitenwand (102) und des flachen Umfangsabschnitts (103) des zu formenden Behälters (C') dauerhaft zu plissieren oder falten, und das Bördelelement (20) und das Gegen-Bördelelement (23) zusammenwirken, um eine sich von dem flachen Umfangsabschnitt (103) des zu formenden Behälters (C') erstreckende eingerollte Kante (104) zu bilden, **dadurch gekennzeichnet, dass** die bewegliche Werkzeughälfte (15) zumindest teilweise in das Gegen-Bördelelement (23) eingesetzt werden kann, um die eingerollte Kante (104) des Behälters (100) zwischen der Liegeebene des zugehörigen flachen Umfangsabschnitts (103) und dem Boden (101) des Behälters (100) zu bilden.

2. Vorrichtung (10) nach Anspruch 1, wobei der Abschnitt der beweglichen Werkzeughälfte (15), der zumindest teilweise in das Gegen-Bördelelement (23) eingesetzt werden kann, der radial äußerste Abschnitt ist, der zusammen mit einem entsprechenden Abschnitt der stationären Werkzeughälfte (14) den flachen Umfangsabschnitt (103) des zu formenden Behälters (C') definiert.

3. Vorrichtung nach Anspruch 1 oder 2, wobei die bewegliche Werkzeughälfte (15) für eine Länge (H), die zumindest der in einer Ebene hypothetisch ausgebildeten radialen Erstreckung der eingerollten Kante (104) entspricht, in das Gegen-Bördelelement (23) einsetzbar ist.

4. Vorrichtung nach einem der Ansprüche 1-3, wobei der radial äußerste Abschnitt (14") der feststehenden Werkzeughälfte (14) zusammen mit dem entsprechenden Abschnitt (15") der beweglichen Werkzeughälfte (15) den flachen Umfangsabschnitt (102) des zu formenden Behälters (D') definiert, und wobei der radial äußerste Abschnitt (14") der feststehenden Werkzeughälfte (14) nicht in das Bördelelement (20) einsetzbar ist.

5. Vorrichtung nach einem der vorhergehenden Ansprüche, wobei das Bördelelement (20) und das Gegen-Bördelelement (23) jeweilige Nuten (20', 23') aufweisen, die einander gegenüberliegend angeordnet sind.

6. Vorrichtung (10) nach einem der vorhergehenden Ansprüche, wobei:
- die bewegliche Werkzeughälfte (15) und das Schneidmesser (18) einstückig mit der beweglichen Werkzeugträgerplatte (12) ausgebildet sind,
- das Bördelelement (20) und das dauerhafte Plissier-/Faltenelement (19) gegenüber der beweglichen Werkzeugträgerplatte (12) wechselweise in beiden Zustellbewegungsrichtungen (X) der beweglichen Werkzeugträgerplatte (12) zu der feststehenden Werkzeugträgerplatte (11) verfahrbar sind, um bei Bedarf eine Relativbewegung zwischen der beweglichen Werkzeughälfte (15) und dem Bördelelement (20) zu bewirken,
- die feststehende Werkzeughälfte (14) gegenüber der feststehenden Werkzeugträgerplatte (11) wechselweise in beiden Zustellbewegungsrichtungen (X) der beweglichen Werkzeugträgerscheibe (12) zu der feststehenden Werkzeugträgerplatte (11) verfahrbar ist, um eine bei Bedarf eine Relativbewegung zwischen der feststehenden Werkzeughälfte (14) und dem Gegen-Bördelelement (23) zu bewirken;
- das Gegenmesser (21) und das Gegen-Bördelelement (23) einstückig mit der feststehenden Werkzeugträgerplatte (11) ausgebildet sind;
- das dauerhafte Gegen-Plissier-/Faltenelement (22) gegenüber der feststehenden Werkzeugträgerplatte (11) wechselweise in beiden Zustellbewegungsrichtungen (X) verfahrbar ist.

7. Verfahren zum Formen von Behältern (100) mit einem Boden (101), einer zumindest teilweise dauerhaften plissierten Seitenwand (102) und einer eingerollten Umfangskante (104) aus einem Streifen (C) aus Papiermaterial, mit den Schritten:
a) Schneiden oder Stanzen des Streifens, um einen Rohling (C') mit Abmessungen proportional zu den Abmessungen des zu formenden Behälters (100) zu erhalten;
b) dauerhaftes Plissieren oder Falten von einem oder mehreren Abschnitten einer Umfangskrone (C1) des Rohlings (C');
c) Tiefziehen des Rohlings (C') an dem zugehörigen Abschnitt innerhalb des Umfangskranzes (C1), um den Boden (101) und die Seitenwand (102) des Behälters unter Belassung eines flachen Umfangsabschnitts (103) außerhalb der Seitenwand zu formen;
d) Falten eines Umfangsabschnitts (105) des flachen Abschnitts (103) in einer im Wesentlichen orthogonal zu der Liegeebene des Bodens (101) des zu formenden Behälters (C') liegende Stellung und in Richtung zu dieser hin;
e) Einrollen des Umfangsabschnitts (105) des flachen Abschnitts (103) auf sich selbst, um eine eingerollte Umfangskante (104) um den flachen Abschnitt (103) herum in einer Zwischenstellung zwischen der Liegeebene des flachen Abschnitts (103) und dem Boden (101) des geformten Behälters zu erhalten,
wobei die Schritte a) bis e) mittels der Vorrichtung (10) nach einem der Ansprüche 1 bis 6 durchgeführt werden, und wobei:
- Schritt a) ausgeführt wird, indem das Schneidmesser (18) und das Gegen-Schneidmesser (21) jeweils entlang des Umfangs des zu formenden Rohlings (C') nebeneinander gebracht werden;
- Schritt b) ausgeführt wird, indem zumindest ein Teil des dauerhaften Plissier-/Faltenelement (19) mit dem dauerhaften Gegen-Plissier-/Faltenelement (22) von gegenüberliegenden Seiten in Bezug auf den in Schritt a) erhaltenen Rohling (C') in Eingriff gebracht wird;
- Schritt c) ausgeführt wird, indem die bewegliche Werkzeughälfte (15) auf die stationäre Werkzeughälfte (14) von gegenüberliegenden Seiten in Bezug auf den in Schritt a) erhaltenen und in Schritt b) dauerhaft plissierten oder gefalteten Rohling (C') aufgesetzt wird;
**dadurch gekennzeichnet, dass**
- Schritt d) dadurch ausgeführt wird, dass die bewegliche Werkzeughälfte (15) und die feststehenden Werkzeughälfte (14), die aufeinander geschlossen und einstückig miteinander ausgebildet sind, zumindest teilweise innerhalb des Gegen-Bördelelements (23) derart verfahren werden, dass die bewegliche Werkzeugträgerplatte (12) gegen die feststehende Werkzeugträgerplatte (11) schließt;
- Schritt e) erfolgt durch Verschieben des Bördelelements (20) in Anlage an dem Gegen-Bördelelement (23) und durch Verfahren der beweglichen Werkzeughälfte (15) und der feststehenden Werkzeughälfte (14), die in diesem Schritt aufeinander geschlossen und einstückig miteinander ausgebildet sind, in der entgegengesetzten Weise zu Schritt d) in eine Stellung, in der die bewegliche Werkzeughälfte (15) nicht in das Gegen-Bördelelement (23) eingesetzt ist, unter Durchführung einer Relativbewegung sowohl bezüglich des Bördelelements (20) als auch des Gegen-Bördelelements (23).

8. Verfahren nach Anspruch 7, wobei die Schritte b) und c) gleichzeitig durchgeführt werden.

9. Verfahren nach Anspruch 7, wobei, während des Schritts b), der Abschnitt (C1) Rohlings (C'), welcher von den aufeinander geschlossenen dauerhaften Plissier-/Faltenelementen (19) und Gegen-Plissier-/Faltenelementen (22) erfasst wird, zumindest teilweise von diesen Elementen abgenommen wird, um das Tiefziehen von Schritt c) zu ermöglichen.

10. Verfahren nach einem der Ansprüche 7 bis 9 ferner umfassend den Schritt des Befeuchtens des Streifens (C) aus Papiermaterial vor dem Formen des Behälters und den Schritt des Erwärmens der beweglichen Werkzeughälfte (15) und der feststehenden Werkzeughälfte (14) zur Stabilisierung der Form des zu formenden Behälters (C') vor seiner Fertigstellung.

## Revendications

1. Appareil (10) pour mouler des récipients (100) à partir d'une bande (C) de papier, comprenant un plaque porte-moule fixe (11) et une plaque porte-moule mobile (12) qui est mobile par rapport à celui-ci entre une position distale ouverte et une position proximale fermée, dans lequel:
- la plaque porte-moule fixe (11) comprend une demi-moule fixe respective (14) et la plaque porte-moule mobile (12) comprend une respective demi-moule mobile (15), dans lequel, dans la position fermée, la demi-moule fixe (14) et la demi-moule mobile (15) définissent ensemble une empreinte correspondant à un récipient (100) pourvu d'un fond (101), d'une paroi latérale (102) et d'une portion périmètrale plate (103) s'étendant en porte-à-faux de la paroi latérale (102), et
- un élément d'enroulement (20), un élément de plissage/plissement permanent (19) et une lame coupante (18) sont disposés de manière concentrique et successive autour de la demi-moule mobile (15), et
- un contre-élément d'enroulement (23), un contre-élément de plissage/plissement permanent (22) et une contre-lame de coupage (21) sont disposés de manière concentrique et successive autour de la demi-moule fixe (14), et dans lequel
- la lame coupante (18) et la contre-lame de coupage (21) interagissent pour couper, à partir de la bande initiale (C), une ébauche (C') ayant des dimensions proportionnelles aux dimensions du récipient (100) à mouler, l'élément de plissage/plissement permanent (19) et le contre-élément de plissage/plissement permanent (22) interagissent pour plisser ou froisser de façon permanente une couronne périphérique (C1) de ladite ébauche (C') par au moins une partie des deux parois latérales (102) et la portion périmètrale plate (103) du récipient (C') en cours de moulage, et l'élément d'enroulement (20) et le contre-élément d'enroulement (23) interagissent pour former un bord recourbé (104) s'étendant de la portion périmètrale plate (103) du récipient (C') en cours de moulage, **caractérisé en ce que** la demi-moule mobile (15) peut au moins partiellement être introduite dans le contre-élément d'enroulement (23) pour former le bord recourbé (104) du récipient (100) entre le plan horizontal de la portion périmètrale plate (103) correspondante et le fond (101) du récipient (100) lui-même.

2. Appareil (10) selon la revendication 1, dans lequel la portion de la demi-moule mobile (15), qui peut être au moins partiellement introduite dans le contre-élément d'enroulement (23), est la portion radialement la plus à l'extérieur qui définit, avec une portion correspondante de la demi-moule fixe (14), la portion périmètrale plate (103) du récipient (C') en cours de moulage.

3. Appareil selon la revendication 1 ou la revendication 2, dans lequel la demi-moule mobile (15) peut être introduite dans le contre-élément d'enroulement (23) sur une longueur (H) correspondant au moins à l'extension radiale du bord recourbé (104) telle qu'hypothétiquement développée sur un plan.

4. Appareil selon l'une quelconque des revendications 1-3, dans lequel la portion radialement la plus à l'extérieur (14") de la demi-moule fixe (14) définit, avec la portion correspondante (15") de la demi-moule mobile (15), la portion périmètrale plate (102) du récipient (C') en cours de moulage, et dans lequel la portion radialement la plus à l'extérieur (14") de la demi-moule fixe (14) ne peut pas être introduite dans l'élément d'enroulement (20).

5. Appareil selon l'une quelconque des revendications précédentes, dans lequel l'élément d'enroulement (20) et le contre-élément d'enroulement (23) comprennent des rainures respectives (20', 23') qui sont opposées les unes par rapport aux autres.

6. Appareil (10) selon l'une quelconque des revendications précédentes, dans lequel:
- la demi-moule mobile (15) et la lame coupante (18) font partie intégrante de la plaque porte-moule mobile (12),
- l'élément d'enroulement (20) et l'élément de plissage/plissement permanent (19) peuvent être alternativement translatés par rapport à la plaque porte-moule mobile (12) dans les deux sens de direction d'approche (X) de la plaque porte-moule mobile (12) vers la plaque porte-moule fixe (11) afin de provoquer un mouvement relatif entre la demi-moule mobile (15) et l'élément d'enroulement (20) si nécessaire,
- la demi-moule fixe (14) peut être alternativement translatée par rapport à la plaque porte-moule fixe (11) dans les deux sens de direction d'approche (X) de la plaque porte-moule mobile (12) vers la plaque porte-moule fixe (11) afin de provoquer un mouvement relatif entre la demi-moule fixe (14) et le contre-élément d'enroulement (23) si nécessaire;
- la contre-lame (21) et le contre-élément d'enroulement (23) font partie intégrante de la plaque porte-moule fixe (11);
- le contre-élément de plissage/plissement permanent (22) peut être alternativement translaté par rapport à la plaque porte-moule fixe (11) dans les deux sens de ladite direction d'approche (X).

7. Méthode pour mouler des récipients (100) ayant un fond (101), une paroi latérale plissée (102) au moins partiellement permanente et un bord périphérique recourbé (104) à partir d'une bande (C) de papier, comprenant les étapes de:
a) couper ou découper la bande afin d'obtenir une ébauche (C') ayant des dimensions proportionnelles aux dimensions du récipient (100) à mouler;
b) plisser ou froisser de manière permanente une ou plusieurs portions de la couronne périmètrale (C1) de ladite ébauche (C');
c) emboutir ladite ébauche (C') sur la portion interne correspondante à ladite couronne périmètrale (C1) afin de former le fond (101) et la paroi latérale (102) du récipient tout en laissant une portion périmètrale plate (103) à l'extérieur de la paroi latérale;
d) plier une portion périphérique (105) de ladite portion plate (103) dans une position essentiellement orthogonale au plan de disposition du fond (101) du récipient (C') en cours de moulage et vers celui-ci;
e) rouler la portion périphérique (105) de ladite portion plate (103) sur elle-même afin d'obtenir un bord périmètral recourbé (104) autour de la portion plate (103) elle-même, dans une position intermédiaire entre le plan de disposition de la portion plate (103) et le fond (101) du récipient moulu,
dans laquelle les étapes de a) à e) sont réalisées au moyen de l'appareil (10) selon l'une quelconque des revendications 1-6, et dans laquelle:
- l'étape a) est effectuée en portant la lame coupante (18) et la contre-lame de coupage (21) l'une à côté de l'autre le long du périmètre de l'ébauche (C') à mouler;
- l'étape b) est effectuée en engageant au moins partiellement l'élément de plissage/plissement permanent (19) avec le contre-élément de plissage/plissement permanent (22) à partir des côtés opposés par rapport à l'ébauche (C') obtenue dans l'étape a);
- l'étape c) est effectuée en chaussant la demi-moule mobile (15) sur la demi-moule fixe (14) à partir des côtés opposés par rapport à l'ébauche (C') obtenue dans l'étape a) et plissée ou froissée de manière permanente dans l'étape b);
**caractérisée en ce que**:
- l'étape d) est effectuée en translatant la demi-moule mobile (15) et la demi-moule fixe (14) qui, dans cette étape, sont refermées l'une sur l'autre et partie intégrante l'une par rapport à l'autre, au moins partiellement dans le contre-élément d'enroulement (23), de façon à guider la plaque porte-moule mobile (12) à se fermer contre la plaque porte-moule fixe (11);
- l'étape e) est effectuée en déplaçant l'élément d'enroulement (20) en butée contre le contre-élément d'enroulement (23) et en translatant la demi-moule mobile (15) et la demi-moule fixe (14) qui, dans cette étape, sont refermées l'une sur l'autre et partie intégrante l'une par rapport à l'autre, dans le sens opposé par rapport à l'étape d), dans une position dans laquelle la demi-moule mobile (15) n'est pas introduite dans le contre-élément d'enroulement (23), et en effectuant un mouvement relatif par rapport à l'élément d'enroulement (20) et à le contre-élément d'enroulement (23).

8. Méthode selon la revendication 7, dans laquelle les étapes b) et c) sont effectuées en même temps.

9. Méthode selon la revendication 7, dans laquelle, pendant l'étape b), la portion (C1) d'ébauche (C') interceptée par l'élément de plissage/plissement permanent (19) et le contre-élément de plissage/plissement permanent (22), qui sont refermés l'un sur l'autre, est au moins partiellement retirée de ces éléments pour permettre l'emboutissage de l'étape c).

10. Méthode selon l'une quelconque des revendications 7-9, comprenant en outre l'étape d'humidifier la bande (C) de papier avant de mouler le récipient et l'étape de chauffer la demi-moule mobile (15) et la demi-moule fixe (14) afin de stabiliser la forme du récipient (C') en cours de moulage, avant de le terminer.
